(19) Europäisches Patentamt
European Patent Office
Office européen des brevets

(11) Veröffentlichungsnummer: **0 239 813**
**A2**

(12) # EUROPÄISCHE PATENTANMELDUNG

(21) Anmeldenummer: **87102988.0**

(22) Anmeldetag: **03.03.87**

(51) Int. Cl.4: **C08K 5/43** , C08K 5/47 , C08L 21/00

(30) Priorität: **01.04.86 DE 3610796**

(43) Veröffentlichungstag der Anmeldung: **07.10.87 Patentblatt 87/41**

(84) Benannte Vertragsstaaten: **AT BE CH DE ES FR GB IT LI LU NL SE**

(71) Anmelder: **Degussa Aktiengesellschaft**
**Weissfrauenstrasse 9**
**D-6000 Frankfurt am Main 1(DE)**

(72) Erfinder: **Schwarze, Werner, Dr.**
**Lerchesbergring 99**
**D-6000 Frankfurt 70(DE)**
Erfinder: **Wolff, Siegfried**
**Weiherstrasse 28**
**D-5303 Bornheim-Merten(DE)**
Erfinder: **Lambertz, Horst**
**Kreuzstrasse 37**
**D-5030 Hürth(DE)**

(54) **Verwendung von substituierten N-trichlormethylthiohydantionen in Kombination mit Bis-(2,4-diamino-s-triazin-6-yl)-oligosulfiden in vulkanisierbaren Kautschukmischungen und derartige Kautschukmischungen.**

(57) Die Erfindung betrifft die Verwendung von substituierten N-Trichlormethylthiohydantoinen in Kombination mit Bis-(2,4-diamino-s-triazin-6-yl)-oligosulfiden in vulkanisierbaren Kautschukmischungen und zur Verbesserung der Vulkanisationscharakteristik und derartige Kautschukmischungen.

EP 0 239 813 A2

**Verwendung von substituierten N-Trichlormethylthiohydantoinen in Kombination mit Bis-(2,4-diamino-s-triazin-6-yl) -oligosulfiden in vulkanisierbaren Kautschukmischungen und derartige Kautschukmischungen**

Die Erfindung betrifft die Verwendung von substituierten N-Trichlormethylthiohydantoinen in Kombination mit Bis-(2,4-diamino-s-triazin-6-yl)-oligosulfiden in vulkanisierbaren Kautschukmischungen als Vulkanisationsverzögerer mit einem die Vernetzungsdichte erhöhendem Effekt und derartige Kautschukmischungen.

Für die Vernetzung von Elastomeren mit Schwefel, dessen Vulkanisationscharakteristik selbst völlig unzureichend ist, steht eine Reihe von Vulkanisationsbeschleunigern zur Verfügung, die - bereits in geringer Menge zugesetzt - sowohl die auf chemischem Wege zu erreichende Vernetzungsdichte kräftig erhöhen als auch die Kinetik der Vernetzung so stark verbessern, daß der Vulkanisationsprozeß auch im Produktionsmaßstab rationell durchgeführt werden kann.

Obwohl die Vernetzung von Kautschukmischungen auch ohne freien Schwefel durchführbar ist, zum Beispiel mit Hilfe von Peroxiden oder Thiuramen, bezieht sich die Erfindung auf die beschleunigte Schwefelvulkanisation und die Vernetzung mit N,N′-substituierten Bis-(2,4-diamino-s-triazin-6-yl)-oligosulfiden gemäß Formel (II).

Letzteres ohne freien Schwefel mit Tetrasulfiden (n = 4) und Gemischen von Oligosulfiden, deren mittlere Kettenlänge $S_4$ entspricht (ebenfalls n = 4).

Mercaptane, Disulfide und Sulfenamide auf Benzthiazolbasis sind die wichtigsten Beschleuniger der Schwefelvulkanisation. In der Wirkungsweise ähnlich sind entsprechende Verbindungen auf Triazinbasis, beschrieben in DE-PS 1669954 und DE-PS 1298706. In die gleiche Kategorie gehören auch die N,N′-substituierten Bis-(2,4-diamino-s-triazin-6-yl)-oligosulfide (n = 4), beschrieben in Patentanmeldung P die im Gegensatz zu den vorgenannten Beschleunigern auch ohne Zusatz von freiem Schwefel vernetzen unter Aufbau einer -S-, -S-S-, -S-$S_x$ S Vernetzungsstruktur.

Der Vernetzungsvorgang bei der beschleunigten Schwefelvulkanisation läßt sich in der Regel in 3 Phasen zerlegen, nämlich in die Inkubationszeit der Vernetzungsreaktion, den Vernetzungsvorgang selbst, charakterisiert durch die Geschwindigkeitskonstante und die Vernetzungsausbeute, und die Überheizungsperiode. Die vorgenannten Beschleuniger unterscheiden sich in ihrem Verhalten in der Regel in allen 3 Phasen.

Aus Gründen der Verarbeitungssicherheit von Kautschuk mischungen, besonders wenn die Verarbeitungstemperatur zur Erhöhung der Produktivität angehoben werden muß, setzt man zur Verlängerung der Inkubationszeit der Vulkanisationsreaktion sogenannte Verzögerer oder "pre vulcanization inhibitors" zu. In der Praxis haben sich für die Verzögerung der Schwefelvulkanisation mit Sulfenamiden vorzugsweise Santoguard ®, PVI (N-Cyclohexylthio-phthalimid; C.D. Trivette et al., Rubber Chem. Technol. 50, 570 (1977), Monsanto, USP 3.427.319, 3.546.185, 3.752.824, 3.855.262) und für Benzthiazolyldisulfid vorzugsweise das Vulkalent ®E (Bayer AG, N-Phenyl-N-)trichlormethylsulfenyl)-benzolsulfonamid, DE-OS 1.957.484) als wirksame Mittel erwiesen.

Aufgabe der Erfindung ist die Verbesserung der Vulkanisationscharakteristik von Kautschukmischungen.

Gegenstand der Erfindung ist die Verwendung von Verbindungen der allgemeinen Formel

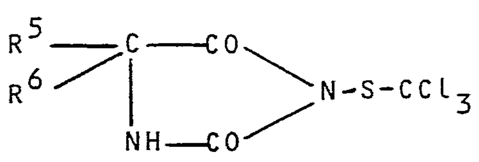

worin bedeuten:

$R^5$ und $R^6$: H,$C_1$ -$C_6$-alkyl, bevorzugt $C_1$-$C_4$-Alkyl, Benzyl, Phenyl, gleich oder verschieden,

$R^5$ und $R^6$ eine geschlossene $C_4$-$C_6$ Methylenkette, wobei der gebildete Ring ein-oder 2-fach durch $CH_3$-Gruppen substituiert sein kann (Spiroverbindungen),

in vulkanisierbaren Kautschukmischungen in Kombination mit oligosulfidischen Verbindungen der allgemeinen Formel

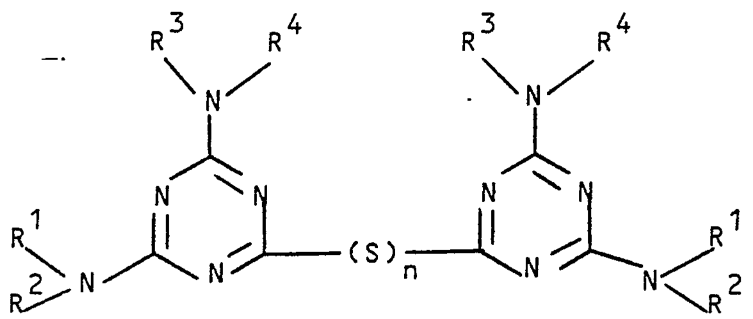

(II)

in welcher bedeuten:
$R^1$, $R^2$ = H; $R^2$ = Benzyl
$R^2$, $R^3$, $R^4$ = $C_1$-$C_8$ Alkyl, bevorzugt $C_1$-$C_4$-Alkyl, verzweigt oder unverzweigt, Alkyl, $C_3$-$C_8$-Cycloalkyl, letzteres unsubstituiert oder mit 1-3 Methylgruppen substituiert, 2-Hydroxiethyl, 3-Hydroxipropyl, 2-Hydroxypropyl oder
$R_3$ und $R_4$ (zusammen): $C_4$-$C_6$-Alkylen,-$(CH_2$-$CHX)_2Y$ mit X = -$CH_3$, H; Y = 0,5
n = 2 oder 4,
oder ein Gemisch von Verbindungen gemäß Formel II, bei den $S_n$ einer mittleren statistischen Kettenlänge mit n = 4 entspricht.

Das Verfahren zur Herstellung der reinen Tetrasulfide mit einer linearen $S_4$-Kette zwischen den beiden substituierten Triazinresten ist dadurch gekennzeichnet, daß man eine wässrige, alkalische Lösung der entsprechenden N,N'-substituierten 2,4-Diamino-6-mercaptotriazine in einem Zweiphasensystem mit einer $S_2Cl_2$-Lösung in einem inerten organischen Lösungsmittel, in welchem das Reaktionsprodukt nicht oder sehr wenig löslich ist, bei Temperaturen zwischen -5°C - <+20°C, vorzugsweise von + 10°C, umsetzt. Vorteilhaft stellt man eine alkalische wässrige Lösung des Mercaptotriazins her, die mindestens die zur Umsetzung notwendige stöchiometrische Menge an Alkalihydroxid, bevorzugt einen Überschuß von 1 - 20 Mol%, bezogen auf das eingesetzte Mercaptotriazin, enthält.

Diese Lösung wird mit einem Lösungsmittel versetzt, in welchem das Endprodukt der Reaktion nicht oder wenig löslich ist, bevorzugt mit $C_5$-$C_{10}$-Alkanen oder $C_5$-$C_8$-Cycloalkanen, gegebenenfalls substituiert mit 1 bis 3 Methylgruppen, und deren Gemischen. Diese Mischung wird stark gerührt und abgekühlt, bevorzugt auf +10°C. Nun läßt man in diese Mischung unter guter Kühlung eine Lösung von $S_2Cl_2$ in dem verwendeten Lösungsmittel zutropen. $S_2Cl_2$ wird mindestens im Verhältnis 2 Mol Mercaptotriazin : 1 Mol $S_2Cl_2$ verwendet, doch kann dieses Verhältnis je nach Alkaliüberschuß auch 2:1,1 - 1,2 betragen.

Unter den gegebenen Bedingungen wirkt $S_2Cl_2$ ausschließlich kondensierend.

Das entstandene Produkt wird mit Hilfe allgemein bekannter Maßnahmen abgetrennt und vorteilhaft bei Temperaturen bis zu +50°C unter Vakuum (10 Torr) getrocknet.

Verwendet werden ebenso Gemische, bestehend aus Verbindungen der allgemeinen Formel

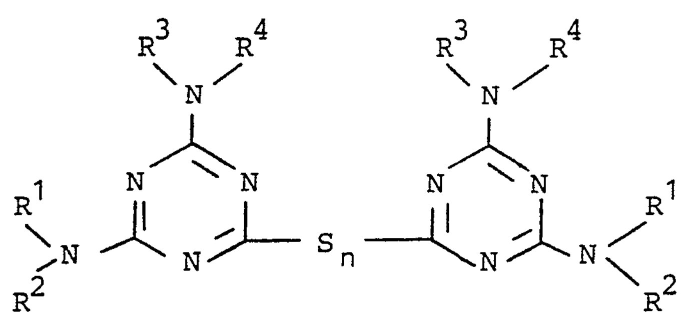

(II)

in der $R^1$, $R^2$, $R^3$ und $R^4$ obengenannte Bedeutung haben und $S_n$ einer mittleren statistischen Kettenlänge mit n = 4 entspricht.

Diese Gemische aus Oligosulfiden, im folgenden Text auch als Disproportionate bezeichnet, da sie durch Disproportionierung von Tetrasulfiden gemäß Formel II entstehen, können auf mehreren Wegen dargestellt werden.

Dabei sind die Reaktionsbedingungen so zu steuern, daß kein freier Schwefel entsteht.

Ein Verfahren ist dadurch gekennzeichnet, daß man ein isoliertes Tetrasulfid gemäß Formel II über seinen Schmelzpunkt hinaus erhitzt, vorzugsweise um 20 - 50°C.

In einem weiteren Verfahren löst man die Tetrasulfide gemäß Formel II in einem inerten organischen Lösungsmittel und führt die Disproportionierungsreaktion im Temperaturbereich zwischen 20°C (Stehenlassen bei Zimmertemperatur) und Siedepunkt des eingesetzten Lösungsmittels durch.

Eine besonders elegante Methode besteht darin, daß man eine wässrige alkalische Lösung der entsprechenden N,N'-substituierten 2,4-Diamino-6-mercaptotriazine in einem Zweiphasensystem mit einer Lösung von $S_2Cl_2$ in einem inerten, das entstehende Tetrasulfid lösende organischen Lösungsmittel umsetzt. Das entstehende lineare Tetrasulfid wird dann in der Folge sofort in das erfindungsgemäße Gemisch disproportioniert.

Als Lösungsmittel sind geeignet insbesondere chlorierte Kohlenwasserstoffe zum Beispiel $CH_2Cl_2$ und $CHCl_3$, aber auch Ether, Ester, sowie aromatische Kohlenwasserstoffe und Ketone sind für die Disproportionierungsreaktion in Abwesenheit von Wasser geeignet. Bei der Tetrasulfidbildung sind sie einsetzbar, wenn sie mit Wasser ein zweiphasiges Gemisch bilden. Die Reaktionsbedingungen zur Herstellung der Disproportionate sind ansonsten identisch mit denen zur Herstellung der reinen Tetrasulfide.

Bis zu welchem Grad die Disproportionierungsreaktion fortgeschritten ist, bleibt für die Eignung des entstehenden Gemisches ohne Bedeutung.
Es darf nur kein freier Schwefel während der Disproportionierung entstehen.

Es zeigt sich, daß sich bei kombinierter Verwendung der Verbindungen gemäß den Formeln (I) und (II) nicht nur eine starke Verzögerung der Anvulkanisation erreichen läßt, sondern die Vulkanisationscharakteristik gleichzeitig so verbessert wird, daß alle auf die Vernetzungsdichte ansprechenden physikalischen Daten, wie das maximale Drehmoment (Rheometer) oder die Spannungswerte bei 300 % Dehnung, beträchtlich angehoben werden.

Bevorzugt eingesetzt werden beispielsweise

VZ g 3-Trichlormethylthio-5,5-dimethylhydantoin
VZ h 3-Trichlormethylthio-5-benzylhydantoin
VZ i 3-Trichlormethylthio-5-n-propylhydantoin
VZ k 3-Trichlormethylthio-5-isopropylhydantoin
VZ 1 3-Trichlormethylthio-5-pentamethylenhydantoin

Diese Substanzen sind bekannt.
(Kittleson, Science 115, 84 (1952), USP 2.553.770, G.P. Lampson und H.O. Singher, J. Org. Chem. 21,684-685) Sie zeichnen sich durch starke fungicide und zum Teil baktericide Wirkung aus . Man stellt sie aus den entsprechenden Hydantoinen und Trichlormethylsulfenylchlorid in Anwesenheit eines Säureacceptors her.

Die N,N'-substituiertenBis-(2,4-diamino-s-triazin-6-yl)-disulfide gemäß Formel (II) werden in der DE-PS 1669954 beschrieben, zum Beispiel Bis-(2-ethylamino-4-diethylamino-s-triazin-6-yl)-disulfid,Bis-(2-ethylamino-4-di-n-isopropylamino-s-triazin-6-yl)-disulfid.

Die anderen N,N'-substituierten Bis-(2,4-diamino-s-triazin-6-yl)-tetra oligosulfide gemäß Formel (II) sind in der anmeldung P genannt.

Bevorzugt eingesetzt werden beispielsweise:

N Bis-(2-ethylamino-4-diethylamino-triazin-6-yl)-tetrasulfid
A Bis-(2-ethylamino-4-di-isopropylamino-s-triazin-6-yl)-tetrasulfid
B Bis-(2-n-butylamino-4-diethylamino-s-triazin-6-yl)-tetrasulfid
C Bis-(2-isopropylamino-4-di -isopropylamino-s-triazin-6-yl)-tetrasulfid
D Bis-(2-ethylamino-4-di-isobutylamino-s-triazin-6-yl)-tetrasulfid
E Bis-(2-ethylamino-4-di-n-propylamino-s-triazin-6-yl)-tetrasulfid
F Bis-(2-n-propylamino-4-diethylamino-s-triazin-6-yl)-tetrasulfid
G Bis-(2-n-propylamino-4-di-n-propylamino-s-triazin-6-yl)-tetrasulfid
H Bis-(2-n-butylamino-4-di-n -propylamino-s-triazin-6-yl)-tetrasulfid
I Bis-(2-ethylamino-4-di-n-butylamino-s-triazin-6-yl)-tetrasulfid
K Bis-(2-isopropylamino-4-di-isopropylamino-s-triazin-6-yl)-oligosulfid-Gemisch
L Bis-(2-cyclohexylamino-4-diethylamino-s-triazin-6-yl)-oligosulfid-Gemisch
M Bis-(2-ethylamino-4-diethylamino-s-triazin-6-yl)-oligosulfid-Gemisch
O Bis-(2-amino-4-diethylamino-s-triazin-6-yl)-oligosulfid-Gemisch

In nach dem Stand der Technik bekannten Kautschukmischungen mit Naturkautschuk (NR), Isoprenkautschuken(IR), Butadienkautschuken(BR), Styrol-Butadienkautschuken(SBR) Isobutylenisoprenkautschuken(IIR), Ethylen-Propylen-Terpolymeren(EPDM),
Nitrilkautschuken(NBR), halogenhaltigen Kautschuken und auch epoxidierte Naturkautschuken(ENR) sowie Verschnitten dieser Kautschuke miteinander sind die substituierten N-Trichlormethylthiohydantoine gemäß Formel (I) als Vulkanisationsverzögerer mit einem die Vernetzungsdichte erhöhenden Effekt zu verwenden in Kombination mit N,N'-substituierten Bis-(2,4-diamino-s-triazin-6-yl)-oligosulfiden gemäß Formel (II).

Gegenstand der Erfindung sind ebenso Kautschukmischungen, die die Verbindungen gemäß den Formeln (I) und (II) enthalten, insbesondere Mischungen, die 0,1 - 5 Teile, bevorzugt 0,1 - 2 Teile, eines oder mehrerer substituierter N-Trichlormethylthiohydantoine und 0,1 - 10 Teile, bevorzugt 0,1 - 5 Teile eines oder mehrerer N,N'-substituierter Bis-(2,4-diamino-s-triazin-6-yl) oligosulfide enthalten, jeweils bezogen auf 100 Teile Kautschuk. In einer bevorzugten Ausführungsform beläuft sich das molare Verhältnis von Hydantoin zu Triazinderivaten 0,3 - 1,5 :1,0, insbesondere 0,3 - 1,2 : 1,0. Freien Schwefel enthalten derartige Mischungen nicht. Bei den Oligosulfiden handelt es sich dann um Tetrasulfide oder Gemische von Verbindungen gemäß Formel II, bei denen $-S_n-$eine mittlere Kettenlänge entsprechend $S_4$ bedeutet.

Weiterer Gegenstand der Erfindung sind Schwefelvulkanisierbare Kautschukmischungen, die zusätzlich Schwefel enthalten, so daß sich für eine besonders geeignete Ausführungsform ein molares Verhältnis von 0,3 - 1,5 (Hydantoinderivat) : 1 (Triazinderivat):0,5 - 1,5 (Schwefel), vorzugsweise 0, 3-1,2 : 1 : 0,5 - 1,5, ergibt.

Zur Erzielung einer weiteren Variationsbreite der Vulkanisationskinetik kann es sich als zweckmäßig erweisen, die Triazinverbindungen gemäß Formel II in Form von Gemischen zweier oder mehrerer Individuen einzusetzen, wobei zur Einhaltung der o.a. Anwendungsmengen, insbesondere der bevorzugten molaren Verhältnisse, die Substitution auf äquimolarer Basis vorzunehmen ist.

Aus kinetischen Gründen kann es sich als zweckmäßig er-weisen, die N,N'-substituierten Bis-(2,4-diamino-s-triazin6-yl)-oligosulfide gemäß Formel II im Gemisch mit konventionellen Beschleunigern der Benzthiazolreihe und/oder Thiuramen einzusetzen, zum Beispiel Benzthiazolsulfenamide Benzthiazoldisulfid, 2-Mercaptobenzthiazol beziehungsweise deren Zinksalze und Tetramethylthiuramdisulfid (s.a. J.van Alphen, Rubber Chemicals (1977)S.1-46).

Mit diesen Dosierungsrichtlinien lassen sich die gestellten Vulkanisationsprobleme lösen, ohne daß es dabei zu einem Vulkanisateigenschaftsverlust kommt.

N,N'-substituierte Bis-(2,4-diamino-s-triazin-6-yl)-oligosulfide gemäß Formel II sind vorteilhaft zusammen mit Organosilanen einzusetzen, zum Beispiel

$[(RO)_3Si - (CH_2)_n]_2-S_x$ (III) oder $(RO)_3-Si-(CH_2)_n-SH$ (IV)

mit x = 2-6, bevorzugt 4, R = $C_1$-$C_6$-Alkyl,Cycloalkyl
n = 2 oder 3
oder

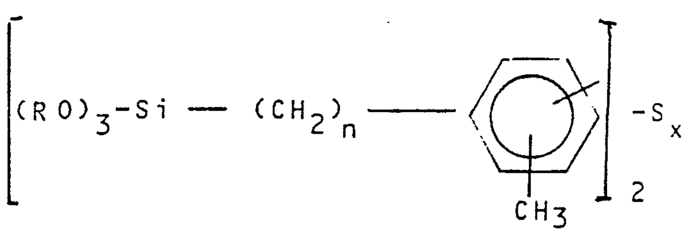
(V)

mit x = 2-6, bevorzugt 3, Alk = Methyl, Ethyl, vorzugsweise Bis-(3-triethoxisilylpropyl)-tetrasulfid (Si 69, Degussa AG) eingesetzt werden, und zwar bei der schwefelfreien Si 69-Vernetzung (DE PS 2536674), bei der Schwefelvulkanisation mit Si 69 (DE-PS 2255577) und ebenso bei der Herstellung reversionsstabiler Vulkanisate durch Aufbau von equilibrium cure systems (Lit.) gemäß DE-PS 2848559. In allen genannten Fällen fungieren N-Trichlormethylthiohydantoine gemäß Formel I als Vulkanisationsverzögerer mit Vernetzungsdichte-erhöhendem Effekt.

Die vulkanisationsverzögernde Wirkung der substituierten N-Trichlormethylthiohydantoine gemäß Formel I tritt auch ein, wenn die N,N'-substituierte Bis-(2,4-diamino-s-triazin-6-yl)-oligosulfide gemäß Formel II einzeln oder im Gemisch zusammen mit konventionellen Beschleunigern und/oder üblichen Schwefelspendern wie zum Beispiel Sulfasan® R (Morpholindisulfid) eingesetzt werden.

Die Verwendung der substituierten N-Trichlormethylthiohydantoine gemäß Formel I als Verzögerer mit Vernetzungsdichte-erhöhendem Effekt in Kombination mit N,N'-substituierten BisBis-(2,4-diamino-s-triazin-6-yl)-sulfiden gemäß Formel II erfolgt in Kautschukmischungen, die als weitere übliche Mischungskomponenten enthalten können:

-Verstärkungssysteme, d.h. Furnace-Ruße, Channel-Ruße, Flammruße, Thermalruße, Acetylenruße, Lichtbogenruße, CK-Ruße usw. sowie synthetische Füllstoffe wie Kieselsäuren, Silikate, Aluminiumoxidhydrate, Calciumcarbonate und natürliche Füllstoffe wie Clays, Kieselkreiden, Kreiden, Talke usw sowie silanmodifizierte Füllstoffe und deren Verschnitte in Mengen von 5 - 300 Teilen,je 100 Teile Kautschuk.

-Zinkoxid und Stearinsäure als Promotoren der Vulkanisation in Mengen von 0.5 - 10 Teilen pro 100 Teile Kautschuk,

-üblicherweise verwendete Alterungs-, Ozon-, Ermüdungsschutzmittel wie zum Beispiel IPPD, TMQ usw. und auch Wachse als Lichtschutzmittel und deren Verschnitte,

-beliebige Weichmacher wie zum Beispiel aromatische, naphthenische, paraffinische, synthetische Weichmacher und deren Verschnitte,

-ggfs. in der Kautschukindustrie dem Stand der Technik entsprechend verwendete Organosilane wie zum Beispiel γ-Chlorpropyltrialkoxisilane, Vinyltrialkoxysilane, γ-Mercaptopropyltrialkoxisilane und Aminoalkyltrialkoxisilane, sowie deren Verschnitte in einer Menge von 0.1 - 25, bevorzugt 1 - 10 Teile je 100 Teile silanolgruppentragender Füllstoffe wie Kieselsäuren, Silikate, Clays usw.

-ggfs. Farbstoffe und Verarbeitungshilfsmittel in der üblichen Dosierung.

Der Anwendungsbereich der der unter Verwendung substituierten N-Trichlormethylthiohydantoine gemäß Formel I in Kombination mit N,N'-substituierten Bis (2,4-diamino-s-triazin-6-yl)-oligosulfiden gemäß Formel II hergestellten Kautschukmischungen erstreckt sich auf die Herstellung von Reifen, auf technische Artikel, wie zum Beispiel Mischungen für Fördergurte, Keilriemen, Formartikel, Schläuche mit und ohne Einlagen, Walzengummierungen, Auskleidungen, Spritzprofile, Freihandartikel, Folien, Schuhsohlen und Oberteile, Kabel, Vollgummireifen und deren Vulkanisate.

Herstellung und Vulkanisation der Kautschukmischungen erfolgt nach den bekannten Verfahren und unter den üblichen Bedingungen.

Beispiel 1:

Man löst 454 g 2-Ethylamino-4-diethylamino-6-mercaptotriazin in Natronlauge, die man aus 84 g NaOH + 1,5 Liter $H_2O$ hergestellt hat.

Die Lösung gibt man in einen 4 Liter 3 Tubenkolben, dann gibt man 1,5 Liter Leichtbenzin (Kp 80 - 110°C) hinzu und kühlt die Mischung unter starkem Rühren auf 0°C ab.

Nun läßt man innerhalb von 20 min. eine Lösung von 137 g $S_2Cl_2$ in100 ml Benzin einlaufen, wobei man darauf achtet, daß die Temperatur +5°C nicht überschreitet.

Das Tetrasulfid fällt sofort aus. Am Ende der Reaktion wird 5 min. nachgerührt, anschließend abgenutscht und gewaschen.

Das schneeweiße feine Pulver wird im Vakuum/12 Torr bei 40 - 45°C getrocknet.

Menge: 499,5 g, entsprechend 97,1 % der Theorie, F. 149 - 150°C.

Analyse:

Bis-(2-ethylamino-4-diethylamino-s-triazin-6-yl)-Tetrasulfid,
Molgew. 516, $C_{18}H_{32}N_{10}S_4$
ber. C 41,9 H 6,2 N 27,1 S 24,8
gef. C 41,8 H 6,5 N 26,8 S 24,8

TLC-und HPLC-Analyse zeigen, daß das Produkt 97,1 % lineares Tetrasulfid enthält.

Beispiel 2:

Man löst 56,6 g 2-Ethylamino-4-di-n-butylamino-6-mercaptotriazin in einer Lösung von 8,8 NaOH in 250 ml Wasser. Dazu gibt man 250 ml Benzin. Die Mischung wird nach gutem Rühren auf +5°C abgekühlt. Nun läßt man eine Lösung von 13,5 g $S_2Cl_2$ in 30 ml Benzin zulaufen. Es bildet sich sofort ein weißer Niederschlag. Am Ende der Reaktion wird nach Beispiel 1 aufgearbeitet. Menge: 56 g, entsprechend 89,2 % der Theorie.

Analyse: $C_{26}H_{48}N_{10}S_4$ (Molgew. 628)
ber. C 49,68 H 7,64 N 22,29 S 20,38
gef. C 49,59 H 7,59 N 22,18 S 20,40

HPLC-Analyse: Reinheitsgrad > 96 %.

Beispiel 3:

107,6 g 2-i-Propylamino-4-diisopropylamino-6-mercaptotriazin löst man in Natronlauge, die man aus 17,6 g NaOH in 600 ml $H_2O$ herstellt. Dazu gibt man 600 ml Methylenchlorid.

Bei 0-5°C läßt man eine Lösung von 27 g $S_2Cl_2$ in 50 ml $CH_2Cl_2$ zulaufen. Am Ende der Reaktion trennt man in einem Scheidetrichter die organische Phase ab, trocknet und dampft im Vakuum ein. Man erhält ein amorphes Pulver; Erweichungspunkt: 90°C.
Ausbeute: 112,5 g, entsprechend 94 % der Theorie.

Analyse: $C_{24}H_{44}N_{10}S_4$ (Molgew. 600)
ber. C 48 H 7,33 N 23,3 S 21,3
gef. C 48,2 H 7,36 N 23,01 S 20,95

Beispiel 4:

Man löst 45,4 g 2-Ethylamino-4 diethylamino-6-mercaptotriazin in Natronlauge, hergestellt aus 8,8 g NaOH und 200 ml Wasser. Dazu gibt man 200 ml Methylenchlorid. Die Mischung wird turbiniert und auf 0°C abgekühlt. Man löst nun 14 g $S_2Cl_2$ in 50 ml $CH_2Cl_2$ und läßt diese Lösung in die Mercaptidlösung einlaufen.

Das Reaktionsprodukt löst sich in $CH_2Cl_2$. Am Ende der Reaktion trennt man die Phasen und arbeitet die $CH_2Cl_2$ Lösung auf. Man erhält so ein amorphes Pulver mit einem Erweichungspunkt von ca. 110°C.
Menge: 46,7 g, entsprechend 90,5 % der Theorie.

Analyse: $C_{18}H_{32}N_{10}S_4$ (Molgew. 516)
ber. N 27,1 S 24,8
gef. N 26,8 S 24,4

Laut TLC-Analyse enthältman ein Gemisch aus 4 Oligosulfide,aber keinen freien Schwefel

Beispiel 5:

Man gibt 50 g Bis-(2-ethylamino-4-diethylamino-s-triazin-6-yl)-Tetrasulfid mit einem Reinheitsgrad von 97,1 % in einen Rundkolben und erwärmt im Ölbad 1 Stunde auf 160°C. Kalt erstarrt die Schmelze amorph. Nach TLC-Analyse enthält das Produkt neben ca. 50 % Ausgangs produkt 3 weitere Oligosulfide.

Beispiel 6:

70,25 g 2-Cyclohexylamino-4-diethylamino-6-mercaptotriazin löst man in 11 g NaOH und 250 ml Wasser. Dazu gibt man 250 ml Chloroform. Unter starkem Rühren läßt man eine Lösung von 16,8 g $S_2Cl_2$ in 30 ml $CHCl_3$ zulaufen. Am Ende der Reaktion trennt man die Phase und arbeitet die Chloroformschicht auf. Man erhält 71,9 g eines weißen amorphen Pulvers, entsprechend 92 % der Theorie.

Analyse: $C_{26}H_{44}N_{10}S_4$ (Molgew. 624)
ber. C 50 H 7,05 N 22,4 S 20,51
gef. C 49,1 H 6,90 N 21,8 S 20

Laut TLC-Analyse setzt sich das Produkt aus ca. 30% linearem $S_4$-Produkt und 70 % Oligosulfiden zusammen, enthält aber keinen freien Schwefel.

Prüfungsnormen

Die physikalischen Prüfungen wurden bei Raumtemperatur nach folgenden Normvorschriften ausgeführt:

| | | gemessen in |
|---|---|---|
| Spannungswert 300% | DIN 53 504 | MPa |
| Inkubationszeit $t_I$ | DIN 53 529 | min |
| Scorchzeit | ASTM D 2084 | min |
| Shore-A-Hähte | DIN 53 505 | Grad |
| $D_{max} - D_{min}$ | DIN 53529 | Nm |

In den Anwendungs-Beispielen werden folgende Namen und Abkürzungen benutzt, deren Bedeutung im folgenden angegeben wird.
RSS: Ribbed Smoked Sheet (Naturkautschuk)
CORAX® N220: Ruß, Oberfläche (BET) 120 m²/g (Degussa)
Naftolen® ZD: Weichmacher aus Kohlenwasserstoffen
Vulkanox® 4010 NA: N-Isopropyl-N'-phenyl-p-phenylendiamin
Vulkanox® HS: Poly-2,2,4-trimethyl-1,2-dihydrochinolin
Mesamoll®: Alkylsulfonsäureester von Phenol und Kresol
Protektor® G 35: Ozonschutzwachs
Vulkacit® MOZ: Benzthiazolyl-2-morpholinosulfenamid
Vulkalent® E: N-Phenyl-N-(trichlormethylsulfenyl)-benzolsulfonamid
Ultrasil® VN 3: gefällte Kieselsäure (Degussa)

Gran. Granulat
V 143: Bis-(2-Ethylamino-4-di-ethylamino-s-triazin-6-yl)-disulfid
V 225 Bis-(2-Isopropylamino-4-di-isopropylamino-s-triazin-6-yl)-disulfid
Sulfasan® R Morpholindisulfid

Beispiel 7: Nachweis der Wirksamkeit verschiedener Hydantoine in rußgefülltem NR in Kombination mit Bis-(2-ethylamino-4-diethylamino-s-triazin-6-yl)-tetrasulfid(N) als Beschleuniger

| | 1 | 2 | 3 | 4 | 5 | 6 | 7 |
|---|---|---|---|---|---|---|---|
| RSS 1, ML (1+4)=70-80 | 100 | 100 | 100 | 100 | 100 | 100 | 100 |
| CORAX N 220 | 50 | 50 | 50 | 50 | 50 | 50 | 50 |
| ZnO RS | 5 | 5 | 5 | 5 | 5 | 5 | 5 |
| Stearinsäure | 2 | 2 | 2 | 2 | 2 | 2 | 2 |
| Naftolen ZD | 3 | 3 | 3 | 3 | 3 | 3 | 3 |
| Protektor G 35 | 1 | 1 | 1 | 1 | 1 | 1 | 1 |
| Vulkanox HS | 1,5 | 1,5 | 1,5 | 1,5 | 1,5 | 1,5 | 1,5 |
| Vulkanox 4010 NA | 2,5 | 2,5 | 2,5 | 2,5 | 2,5 | 2,5 | 2,5 |
| Vulkacit MOZ | 1,43 | - | - | - | - | - | - |
| N | - | 1,5 | 1,5 | 1,5 | 1,5 | 1,5 | 1,5 |
| VZ g | - | - | 0,75 | - | - | - | - |
| VZ h | - | - | - | 0,91 | - | - | - |
| VZ i | - | - | - | - | 0,78 | - | - |
| VZ k | - | - | - | - | - | 0,78 | - |
| VZ l | - | - | - | - | - | - | 0,85 |
| Schwefel | 1,5 | 0,8 | 0,8 | 0,8 | 0,8 | 0,8 | 0,8 |
| $D_{max}-D_{min}$ (170°C),Nm | 8,65 | 7,03 | 8,26 | 7,84 | 7,67 | 7,91 | 7,61 |
| $t_I$ (170°C),min | 4,5 | 2,9 | 4,5 | 4,0 | 4,0 | 4,1 | 4,0 |
| $t_I$ (130°C),min | 22,5 | 9,5 | 21,8 | 21,0 | 21,0 | 21,5 | 22,0 |
| Vulkanisatdaten bei 170°C | | | | | | | |
| Spannungswert 300% | 10,2 | 10,6 | 11,2 | 11,3 | 11,2 | 11,4 | 11,3 |

Beispiel 7 zeigt, daß der Zusatz der N-Trichlormethylthiohydantoine für tetrasulfidische Triazinbeschleuniger eine Scorchverlängerung ergibt (Mischungen 2-7), die die Scorchzeit auf das Niveau der Sulfenamidbeschleunigung (Mischung 1) anhebt. In rußgefülltem NR ist darüberhinaus ein Anstieg der Spannungswerte 300% festzustellen.

Beispiel 8: Vergleich von N-Trichlormethylthiohydantoinen mit Vulkalent E in N 220-gefülltem NR mit N,N'-substituiertem Bis-(2,4-diamino-s-triazin-6-yl)-Tetrasulfid (N) als Beschleuniger

| | 8 | 9 | 10 | 11 | 12 | 13 |
|---|---|---|---|---|---|---|
| RSS 1, ML (1+4) =70-80 | 100 | 100 | 100 | 100 | 100 | 100 |
| CORAX N 220 | 50 | 50 | 50 | 50 | 50 | 50 |
| ZnO RS | 5 | 5 | 5 | 5 | 5 | 5 |
| Stearinsäure | 2 | 2 | 2 | 2 | 2 | 2 |
| Naftolen ZD | 3 | 3 | 3 | 3 | 3 | 3 |
| Protector G 35 | 1 | 1 | 1 | 1 | 1 | 1 |
| Vulkanox 4010 NA | 2,5 | 2,5 | 2,5 | 2,5 | 2,5 | 2,5 |
| Vulkanox HS | 1,5 | 1,5 | 1,5 | 1,5 | 1,5 | 1,5 |
| Vulkacit MOZ | 1,43 | - | - | - | - | - |
| N | - | 1,5 | 1,5 | 1,5 | 1,5 | 1,5 |
| Vulkalent E | - | - | 0,8 | - | - | - |
| VZ g | - | - | - | 0,8 | - | - |
| VZ h | - | - | - | - | 0,8 | - |
| VZ k | - | - | - | - | - | 0,8 |
| Schwefel | 1,5 | 0,8 | 0,8 | 0,8 | 0,8 | 0,8 |
| $t_I$(170°C),min | 4,5 | 2,9 | 3,8 | 4,6 | 4,4 | 4,0 |
| $t_I$(130°C),min | 22,5 | 9,5 | 14,0 | 23,5 | 21,7 | 21,0 |
| Vulkanisatdaten bei 170°C | | | | | | |
| Spannungswert | 10,2 | 10,6 | 10,7 | 11,4 | 11,4 | 11,2 |

Der Vergleich von Vulkalent E (Mischung 10) mit N-Trichlormethyl thiohydantoinen (Mischungen 11-13) zeigt, daß diese Hydantoine zu längerer Inkubationszeit und höherem Spannungswert bei 300% Dehnung führen.

Beispiel 9: Temperaturabhängigkeit der Wirkung von substituierten N-Trichlormethylthiohydantoinen bei Bis-(2-ethylamino-4-diethylamino-s-triazin-6-yl)-disulfidbeschleunigung in N 220-gefülltem NR.

| | 14 | 15 |
|---|---|---|
| RSS 1, ML (1+4)=70-80 | 100 | 100 |
| CORAX N 220 | 50 | 50 |
| ZnO RS | 5 | 5 |
| Stearinsäure | 2 | 2 |
| Naftolen ZD | 3 | 3 |
| Vulkanox 4010 NA | 2,5 | 2,5 |
| Vulkanox HS | 1,5 | 1,5 |
| Protector G 35 | 1 | 1 |
| V 143 | 1,29 | 1,29 |
| VZ l | - | 0,85 |
| Schwefel | 1,5 | 1,5 |
| $t_I$, min: | | |
| 145°C | 9,2 | 18,5 |
| 160°C | 5,2 | 8,6 |
| 170°C | 4,0 | 5,4 |
| 180°C | 2,8 | 4,1 |
| Vulkanisationsgeschw., min: (t 90% - t 10%) | | |
| 145°C | 15,9 | 18,7 |
| 160°C | 4,1 | 5,5 |
| 170°C | 2,0 | 3,1 |
| 180°C | 1,3 | 1,5 |
| Vulkanisatdaten: | | |
| Spannungswert 300%, MPa | | |
| 145°C | 10,6 | 12,1 |
| 170°C | 9,5 | 11,7 |
| Shore-A-Härte: | | |
| 145°C | 65 | 68 |
| 170°C | 63 | 68 |

Der Zusatz eines N-Trichlormethylthiohydantoins bewirkt bei Verarbeitungstemperaturen der Mischungen (< 145°C) eine beträchtliche Verlängerung der Inkubationszeit ohne wesentliche Verringerung der Vulkanisationszeit bei höheren Temperaturen und in jedem Fall eine effektive Steigerung des 300%-Spannungswertes.

**Beispiel 10**: Wirkung von substituierten N-Trichlormethylthiohydantoinen in Bis-(2-ethylamino-4-diethylamino-s-triazin-6-yl)-oligosulfid-Gemisch-haltigem, Ruß N 220/Kieselsäure-gefülltem NR

| | 16 | 17 | 18 |
|---|---|---|---|
| RSS 1, ML (1+4) = 70-80 | 100 | 100 | 100 |
| CORAX N 220 | 25 | 25 | 25 |
| Ultrasil VN 3 Gran. | 25 | 25 | 25 |
| ZnO RS | 5 | 5 | 5 |
| Stearinsäure | 2 | 2 | 2 |
| Naftolen ZD | 3 | 3 | 3 |
| Protector G 35 | 1 | 1 | 1 |
| Vulkanox 4010 NA | 2,5 | 2,5 | 2,5 |
| Vulkanox HS | 1,5 | 1,5 | 1,5 |
| Vulkacit MOZ | 1,43 | - | - |
| M | - | 3 | 3 |
| VZi | - | - | 0,78 |
| Schwefel | 1,5 | 0,8 | 0,8 |
| $t_I$ (170°C), min. | 4,6 | 3,9 | 4,5 |
| $t_I$ (130°C), min. | 33,3 | 16,6 | 32,5 |
| Vulkanisatdaten (170°C): | | | |
| Spannungswert 300% | 3,6 | 6,0 | 8,3 |

In N 220/ Kieselsaure-gefüllten NR-Mischungen zeigtder Zusatz von VZ i (Mischung 18) eine Inkubationszeitverlängerung auf Referenzniveau (Mischung 16) und gleichzeitig eine 300%-Spannungswertsteigerung gegen Mischung 17.

**Beispiel 11:** Wirkung von substituiertem N-Trichlormethylthiohydantoin in N 220-gefülltem NR, beschleunigt mit einem V 225/MOZ-Verschnitt

| | 19 | 20 | 21 |
|---|---|---|---|
| RSS 1, ML (1+4) = 70–80 | 100 | 100 | 100 |
| CORAX N 220 | 50 | 50 | 50 |
| ZnO RS | 5 | 5 | 5 |
| Stearinsäure | 2 | 2 | 2 |
| Naftolen ZD | 3 | 3 | 3 |
| Protector G 35 | 1 | 1 | 1 |
| Vulkanox 4010 NA | 2,5 | 2,5 | 2,5 |
| Vulkanox HS | 1,5 | 1,5 | 1,5 |
| Vulkacit MOZ | 1,43 | 0,72 | 0,72 |
| V 225 | – | 0,75 | 0,75 |
| VZ k | – | – | 0,4 |
| Schwefel | 1,5 | 1,5 | 1,5 |
| $D_{max} - D_{min}$, (170°C) Nm | 8,56 | 8,19 | 8,79 |
| $t_I$ (170°C), min. | 4,5 | 4,2 | 4,8 |
| $t_I$ (130°C), min. | 22,5 | 15,6 | 20,1 |

Bei gemeinsamer Verwendung von N,N'-substituiertemBis-(2,4-diamino-s-triazin-6-yl)-disulfid mit handelsüblichen Sulfenamidbesclheunigern (Mischung 20) wird durch den Zusatz von VZ k (Mischung 21) ebenfalls die Inkubationszeit verlängert.

**Beispiel 12**: Wirkung von VZ g auf N,N'-substituierte Bis-(2,4-diamino-s-triazin-6-yl)-tetrasulfid/Si 69-beschleunigte, N 220/Kieselsäure-gefüllte NR-Mischungen

| | 22 | 23 | 24 |
|---|---|---|---|
| RSS 1, ML (1+4) = 70-80 | 100 | 100 | 100 |
| CORAX N 220 | 25 | 25 | 25 |
| Ultrasil VN 3 Gran. | 25 | 25 | 25 |
| Si 69 | 3,75 | 3,75 | 3,75 |
| ZnO RS | 5 | 5 | 5 |
| Stearinsäure | 2 | 2 | 2 |
| Naftolen ZD | 3 | 3 | 3 |
| Protector G 35 | 1 | 1 | 1 |
| Vulkanox 4010 NA | 2,5 | 2,5 | 2,5 |
| Vulkanox HS | 1,5 | 1,5 | 1,5 |
| Vulkacit MOZ | 1,43 | - | - |
| B | - | 1,66 | 1,66 |
| VZ g | - | - | 0,75 |
| Schwefel | 1,5 | 1,5 | 1,5 |
| $t_I$ (170°C), min. | 4,9 | 4,2 | 5,1 |
| $t_I$ (130°C), min. | 37,5 | 25,4 | 37,0 |

Wie sich am Beispiel 12 feststellen läßt, wird auch bei Anwesenheit von Si 69 in Ruß/ Kieselsäure-gefülltem NR eine Scorchverzögerung erreicht.

**Beispiel** 13: Wirkung von VZ g in einer unter Verwendung von D vernetzten, N 220-gefülltenNR-Mischung mit Schwefelspender

| | 25 | 26 | 27 |
|---|---|---|---|
| RSS 1, ML (1+4) = 70-80 | 100 | 100 | 100 |
| CORAX N 220 | 50 | 50 | 50 |
| ZnO RS | 5 | 5 | 5 |
| Stearinsäure | 2 | 2 | 2 |
| Naftolen ZD | 3 | 3 | 3 |
| Protector G 35 | 1 | 1 | 1 |
| Vulkanox 4010 NA | 2,5 | 2,5 | 2,5 |
| Vulkanox HS | 1,5 | 1,5 | 1,5 |
| Vulkacit MOZ | 1,43 | - | - |
| D | - | 1,76 | 1,76 |
| VZ g | - | - | 0,75 |
| Schwefel | 1,5 | - | - |
| Sulfasan R | - | 0,7 | 0,7 |
| $t_I$ (170°C), min. | 4,5 | 3,2 | 4,6 |
| $t_I$ (130°C), min. | 22,5 | 11,5 | 21,5 |

Auch bei Einsatz in NR-Mischungen mit Schwefelspender zusammen mit N,N'-substituierten Bis-(2,4-diamino-s-triazin-6-yl)-tetrasulfiden ergibt, wie Mischung 27 zeigt,der VZ g-Zusatz eine deutliche Scorchverlängerung bezogen auf das Niveau der Referenzmischung mit Sulfenamidbeschleunigung und Schwefel (Mischung 25).

Beispiel 14: Einfluß von VZ L in Kombination mit N,N'-substituiertem Bis-(2,4-diamino-s-triazin-6-yl)-oligosulfiden in N 330-gefülltem BR

| | 28 | 29 | 30 | 31 |
|---|---|---|---|---|
| Buna CB 10 | 100 | 100 | 100 | 100 |
| CORAX N 330 | 60 | 60 | 60 | 60 |
| ZnO RS | 3 | 3 | 3 | 3 |
| Stearinsäure | 2 | 2 | 2 | 2 |
| Naftolen ZD | 15 | 15 | 15 | 15 |
| Protector G 35 | 1 | 1 | 1 | 1 |
| Vulkanox 4010 NA | 1,5 | 1,5 | 1,5 | 1,5 |
| D | 1,76 | 1,76 | - | - |
| V 225 | - | - | 1,5 | 1,5 |
| VZ L | - | 0,85 | - | 0,85 |
| Schwefel | 1,5 | 1,5 | 1,5 | 1,5 |
| $t_I$ (165°C), min | 4,3 | 5,8 | 6,8 | 9,5 |
| Vulkanisatdaten bei 165°C | | | | |
| Spannungswert 300% | 7,1 | 9,6 | 6,0 | 9,0 |

Beispiel14 zeigt die Inkubationszeitverlängerung von N,N'-substituierten Bis-(2,4-diamino-s-triazin-6-yl)-di-und tetrasulfidbeschleunigtem, N 330-gefülltem Polybutadien und gleichzeitig die beträchtliche 300%-Spannungswertsteigerung durch Zusatz von N-Trichlormethylthio-5-pentamethylenhydantoin

Beispiel 15: Wirkung von VZ l in Kombination mit N,N'-substituiertem Bis-(2,4-diamino-s-triazin-6-yl)-oligosulfiden als Beschleunigern in N 330-gefüllten NBR-Mischungen

| | 32 | 33 | 34 | 35 |
|---|---|---|---|---|
| Perbunan N 3307 NS | 100 | 100 | 100 | 100 |
| CORAX N 330 | 60 | 60 | 60 | 60 |
| ZnO aktiv | 5 | 5 | 5 | 5 |
| Stearinsäure | 1 | 1 | 1 | 1 |
| Mesamoll | 10 | 10 | 10 | 10 |
| Paraffin fest | 1 | 1 | 1 | 1 |
| Vulkanox HS | 1,5 | 1,5 | 1,5 | 1,5 |
| D | 1,76 | 1,76 | - | - |
| V 225 | - | - | 1,5 | 1,5 |
| VZ l | - | 0,85 | - | 0,85 |
| Schwefel | 1,2 | 1,2 | 1,2 | 1,2 |
| $D_{max} - D_{min}$, (170°C) Nm | 9,23 | 12,81 | 8,18 | 12,40 |
| $t_I$ (170°C), min | 3,5 | 4,7 | 4,8 | 8,3 |
| Vulkanisationsgeschwindigkeit t 90 - t 10%, min | 8,2 | 2,8 | 9,4 | 3,3 |
| Vulkanisationsdaten bei 170°C | | | | |
| Spannungswert 300% | 14,0 | 16,9 | 11,6 | 15,6 |

Durch Zusatz von VZ I zu NBR-Mischungen in Gegenwart von N,N'-substituierten Bis-(2,4-diamino-s-triazin-6-yl)-tetra-und disulfiden Verbesserung der Scorchsicherheit bei gleichzeitiger Steigerung der Vulkanisationsgeschwindigkeit ermöglicht. Ebenso erfolgt eine beträchtliche Steigerung des Spannungswertes 300%, trotz des bereits sehr hohen Ausgangsniveaus.

Beispiel 16: Wirkung von VZ i auf die Vulkanisation in Kombination mit N,N'-substituierten Bis-(2,4-diamino-s-triazin-6-yl)-oligosulfiden in NR/BR-Verschnitten.

| | 36 | 37 | 38 | 39 |
|---|---|---|---|---|
| RSS 1, ML (1+4)=70-80 | 70 | 70 | 70 | 70 |
| Buna CB 10 | 30 | 30 | 30 | 30 |
| CORAX N 220 | 50 | 50 | 50 | 50 |
| ZnO aktiv | 5 | 5 | 5 | 5 |
| Stearinsäure | 2 | 2 | 2 | 2 |
| Naftolen ZD | 3 | 3 | 3 | 3 |
| Protektor G 35 | 1 | 1 | 1 | 1 |
| Vulkanox HS | 1,5 | 1,5 | 1,5 | 1,5 |
| Vulkanox 4010 NA | 2,5 | 2,5 | 2,5 | 2,5 |
| D | 1,76 | 1,76 | - | - |
| V 143 | - | - | 1,29 | 1,29 |
| VZ i | - | 0,78 | - | 0,78 |
| Schwefel | 0,8 | 0,8 | 0,8 | 0,8 |
| $t_I$ (170°C), min | 2,7 | 4,3 | 4,1 | 5,7 |
| $t_I$ (130°C), min | 6,6 | 17,2 | 16,8 | 32,8 |

Beispiel 16 zeigt, daß auch im Verschnitt von NR mit Synthesekautschuk ein deutlicher Gewinn an Scorchsicherheit durch Zusatz von N-Trichlormethylthio-5-n-propyl-hydantoin erzielt werden kann.

**Ansprüche**

1. Die Verwendung von Verbindungen der allgemeinen Formel

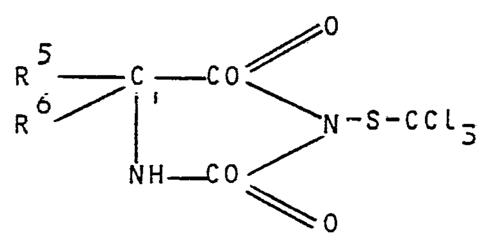

(I)

worin bedeuten:

$R^5$, $R^6$: H, $C_1$-$C_6$-Alkyl, Benzyl, Phenyl, gleich oder verschieden, oder
$R^5$ und $R^6$ eine geschlossene $C_4$-$C_6$-Methylenkette, wobei der gebildete Ring ein-oder 2-fach durch $CH_3$-

Gruppen substituiert sein kann

in Kombination mit oligosulfidischen Verbindungen der allgemeinen Formel

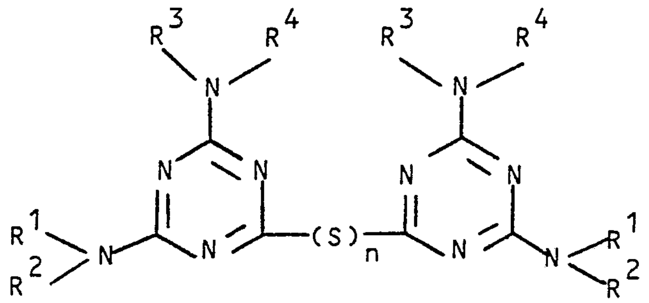

(II)

in welcher bedeuten:
$R^1$, $R^2$ = H; $R^2$ = Benzyl,
$R^2$, $R^3$, $R^4$ = $C_1$-$C_8$-Alkyl, Allyl, $C_3$-$C_8$-Cycloalkyl, letzteres unsubstituiert oder mit 1-3 Methylgruppen substituiert, 2-Hydroxiethyl, 3-Hydroxypropyl, 2-Hydroxypropyl oder
$R^3$ und $R^4$ (zusammen): $C_4$-$C_6$-Alkylen,-$(CH_2$-$CHX)_2Y$ mit X = H, $CH_3$; Y = O,S
n = 2 oder 4,
oder ein Gemisch von Verbindungen gemäß Formel (II), bei denen $S_n$ einer mittleren statistischen Kettenlänge mit n = 4 entspricht,
in Kautschukmischungen als Vulkanisationsverzögerer mit Vernetzungsdichte erhöhendem Effekt.

2. Verwendung der Verbindungen gemäß Anspruch 1 in Kombination mit konventionellen Beschleunigern auf Benzthiazolbasis, insbesondere Mercaptanen, Disulfiden, Sulfenamiden und/oder Thiuramen in vulkanisierbaren Kautschukmischungen.

3. Verwendung von Verbindungen gemäß Anspruch 1 in Kombination mit Organosilanen der allgemeinen Formeln
(III) $[(RO)_3$-$Si$-$(CH_2)_n]_2$-$S_x$ oder $(RO)_3$-$Si(CH_2)_n$-SH (IV)

mit n = 2;3, x = 2-6, R = $C_1$-$C_6$-Alkyl, Cyclohexyl

oder

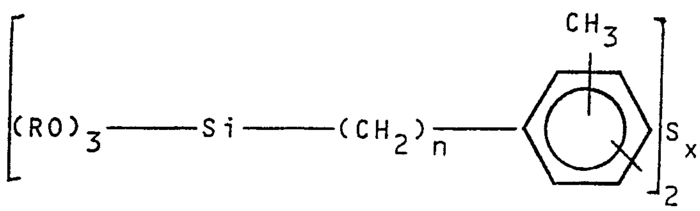

(V)

mit x = 2-6, bevorzugt 3, Alk = Methyl, Ethyl in vulkanisierbaren Kautschukmischungen.

4. Verwendung von Verbindungen der allgemeinen Formeln (I) und (II) gemäß den Ansprüchen 1 bis 3 in Kombination mit zusätzlichen Schwefelspendern in vulkanisierbaren Kautschukmischungen.

5. Schwefelvulkanisierbare Kautschukmischungen, dadurch gekennzeichnet, daß sie 0,1 - 5 Teile substituierte N-Trichlormethylthiohydantoine gemäß Formel (I) enthalten, sowie 0,1 - 10 Teile N,N'-substituierter Bis-(2,4-diamino-s-triazin-6-yl)-oligosulfide gemäß Formel (II) sowie 0,1 - 10 Teile Schwefel, jeweils bezogen auf 100 Teile Kautschuk, wobei die drei Komponenten im molaren Verhältnis von 0.3-1.5 : 1 : 0.5-1.5, vorzugsweise 0.3-1.2 : 1 : 0.5-1.5 stehen.

6. Vulkanisierbare Kautschukmischungen, dadurch gekennzeichnet, daß sie 0,1 - 5 Teile substituierte N-Trichlormethylthiohydantoine gemäß Formel I und 0,1 bis 10 Teile N,N'-substituierter Bis-(2,4-diamino-s-triazin-6-yl)-oligosulfide gemäß Formel II(n = 4) enthalten, jeweils bezogen auf 100 Teile Kautschuk, wobei die beiden Komponenten im molaren Verhältnis von 0,3 - 1,5 : 1 stehen, und kein freier Schwefel enthalten ist.